# EUROPÄISCHE PATENTSCHRIFT

(11) **EP 2 772 371 B1**
(45) Veröffentlichungstag und Bekanntmachung des Hinweises auf die Patenterteilung: **01.02.2017**
(21) Anmeldenummer: 14401026.1
(22) Anmeldetag: 19.02.2014
(51) Int. Cl.: B60G 5/00, B60G 21/067, B60G 21/073, B60G 17/056

(54) **Anhängefahrzeug mit Tandemachse**
Trailer vehicle with a tandem axle
Véhicule de remorquage avec essieu tandem

(30) Priorität: 27.02.2013 DE 102013101924
(43) Veröffentlichungstag der Anmeldung: 03.09.2014
(73) Patentinhaber: Amazonen-Werke H. Dreyer GmbH & Co. KG, 49205 Hasbergen (DE)
(72) Erfinder: Holtkötter, Christian, 33775 Versmold (DE)

(56) Entgegenhaltungen:
- EP-A1- 2 377 700
- EP-A2- 1 571 015
- DE-A1-102009 035 525
- DE-C2- 4 402 182
- US-A- 3 334 913
- US-A- 3 970 327
- US-A- 4 222 578
- US-A1- 2006 192 361

## Beschreibung

Die Erfindung betrifft ein Anhängefahrzeug mit Tandemachse gemäß des Oberbegriffes des Patentanspruches 1.

Ein derartiges Anhängefahrzeug mit Tandemachse ist in der Praxis bekannt geworden. Derartige mit Tandemachsen ausgestattete Anhängefahrzeuge weisen Federungs- und/oder Ausgleichssysteme auf. Hierdurch ist es möglich, dass die vordere Achse bei Fahrwerken mit Tandemachsen komplett entlastet wird oder auch ganz angehoben werden kann.

Grundsätzlich ist es bereits beispielsweise durch EP 1 571 015 A2 oder DE 44 02 182 C2 bekannt, um mehr Gewicht zur Traktionsverstärkung des ziehenden Fahrzeuges von dem angehängten Fahrzeug durch Anheben der vorderen Achse der Tandemachse auf das ziehende Fahrzeug zu verlagern. Wie dieses jedoch im Einzelnen geschieht, ist diesen Dokumenten nicht zu entnehmen.

Der Erfindung liegt die Aufgabe zu Grunde, in einfacher Weise bei einem hydraulischen Ausgleichssystem für die Tandemachse eines Anhängefahrzeuges durch Vergrößerung der Stützlast auf das ziehende Fahrzeug die Traktion des ziehenden Fahrzeuges verstärken zu können.

Diese Aufgabe wird erfindungsgemäß dadurch gelöst, dass in den zu den kolbenstangenseitigen zylinderringförmigen Hubräumen der der hinteren Achse der Tandemachse zugeordneten Ausgleichs- und/oder Federungszylinder führenden Verbindungsleitungen jeweils ein Absperrventil angeordnet sind, dass von der zwischen dem jeweiligen kolbenstangenseitigen zylinderringförmigen Hubraum der hinteren Ausgleichs- und/oder Federungszylinder und dem zugeordneten Absperrventil sich befindlichen Verbindungsleitung jeweils eine zu einem Hydrauliksystem führende und mit einem Umschaltventil versehene Zweigleitung abzweigt.

Infolge dieser Maßnahmen lässt sich in einfacher Weise die Lastverteilung des Federungs- und/oder Ausgleichssystems des Tandemfahrwerks in einfacher Weise so verändern, dass mehr Gewicht von dem Anhängerfahrzeug auf das ziehende Fahrzeug, beispielsweise einem Ackerschlepper übertragen wird. Beim Federungssystem bleiben die federnden Eigenschaften des Fahrwerks enthalten. Erfindungsgemäß wird durch die vorgeschlagenen Maßnahmen die vordere Achse der Tandemachse entlastet. Bei entsprechender Auslegung des Systems bleibt eine Restlast auch noch auf der vorderen Achse der Tandemachse erhalten. Dies wirkt sich insbesondere, wenn die Hinterachse der Tandemachse als gelenkte Achse ausgebildet ist, für die Spurhaltung des Fahrzeugs vorteilhaft aus.

Bei der Tandemachse, die ein Ausgleichs- und/oder Federungssystem aufweist, wirkt auf der Kolbenbodenseite wie auch auf der Kolbenstangenseite im normalen Federungsmodus der gleiche Hydraulikdruck. Hierdurch wird erreicht, dass die Last, die vom Anhängerfahrzeug auf die Federungszylinders wirkt, effektiv nur von der Fläche der Kolbenstange getragen wird. Zur Erhöhung der Traktion wird der kolbenstangenseitige zylinderförmige Hubraum durch die Sperrstellung des Absperrventil von dem übrigen System abgetrennt und drucklos geschaltet, so dass nur die Kolbenbodenseite, also die komplette Kolbenfläche des der hinteren Achse zugeordneten Ausgleichs- und/oder Federungszylinder die Last trägt. Hierdurch wird die vordere Achse der Tandemachse entlastet. Dies führt zu einer höheren Last bzw. Gewichtsübertragung vom Anhängerfahrzeug auf das ziehende Fahrzeug, beispielsweise den Ackerschlepper. Hierdurch ergibt sich eine gewollte Traktionsverstärkung für den Ackerschlepper.

Um in einfacher Weise die im kolbenstangenseitigen Hubraum des der hinteren Achse der Tandemachse zugeordneten Federungszylinders zur größeren Lastübertragung oder Gewichtsübertragung von dem angehängten Fahrzeug auf das ziehende Fahrzeug drucklos zu schalten, ist vorgesehen, dass die einer Verbindungsleitung jeweils zugeordneten Absperrventile und Umschaltventile durch schaltungstechnische Mittel so mit miteinander verknüpft sind, dass bei Absperrstellung des Absperrventiles das zugeordnete Umschaltventil in Durchflussstellung geschaltet ist und bei Durchflussstellung des Absperrventiles das zugeordnete Umschaltventil in Absperrstellung geschaltet ist.

In einfacher Weise ist das das Absperrventil als 2/2 - Wegeventil ausgebildet.

Um ein gutes Federungssystem für die Ausgleichs- und/oder Federungszylinder in einfacher Weise zu schaffen, ist vorgesehen, dass in zumindest einigen der Verbindungsleitungen ein hydropneumatisches Federungselement angeordnet ist.

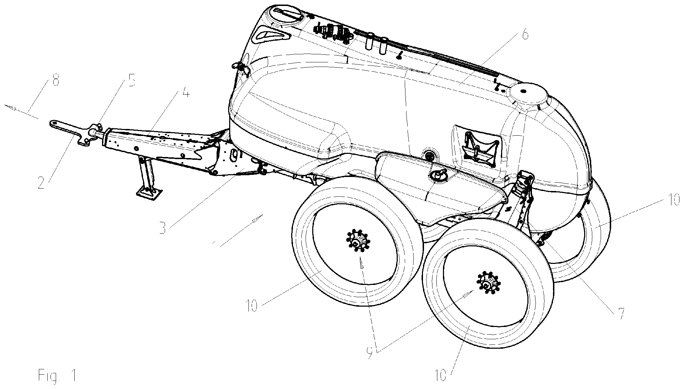

Weitere Einzelheiten der Erfindung sind der Beispielsbeschreibung zu entnehmen. Die Zeichnungen zeigen
- Fig.1: eine als landwirtschaftliche Feldspritze ausgebildetes gezogenes Anhängerfahrzeug mit Tandemachse ohne Spritzgestänge in Prinzipdarstellung und in perspektivischer Ansicht,

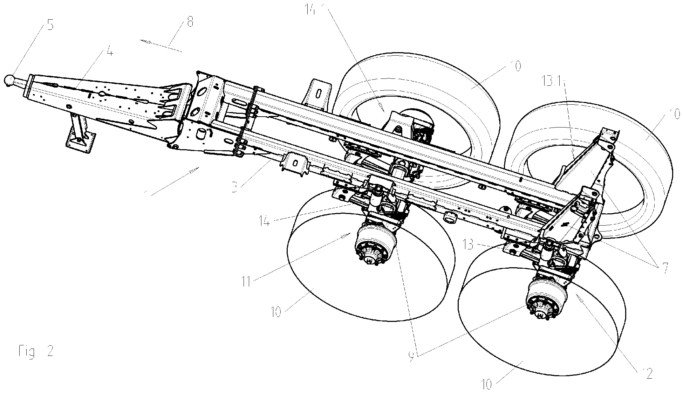

- Fig.2: den Tragrahmen mit der Tandemachse in Prinzipdarstellung und in perspektivischer Ansicht,
- Fig.3: den Ausgleichs- und Federungsplan für die Ausgleichs- und/oder Federungszylinder der Tandemachse des gezogenen Anhängerfahrzeuges in Prinzipdarstellung in der Schaltposition, in welcher die beiden Achsen der Tandemachse in gleicher Weise belastet werden,
- Fig.4: den Ausgleichs- und Federungsplan nach Fig.3 für die Ausgleichs- und/oder Federungszylinder der Tandemachse des gezogenen Anhängerfahrzeuges in Prinzipdarstellung in der Schaltposition, in welcher die Vorderachse der Tandemachse entlastet wird,
- Fig.5: ein weiterer Ausgleichs- und Federungsplan für die Ausgleichs- und/oder Federungszylinder der Tandemachse des gezogenen Anhängerfahrzeuges in Prinzipdarstellung in der Schaltposition, in welcher die beiden Achsen der Tandemachse in gleicher Weise belastet werden,
- Fig.6: den Ausgleichs- und Federungsplan nach Fig.5 für die Ausgleichs- und/oder Federungszylinder der Tandemachse des gezogenen Anhängerfahrzeuges in Prinzipdarstellung in der Schaltposition, in welcher die Vorderachse der Tandemachse entlastet wird,
- Fig.7: ein weiterer Ausgleichs- und Federungsplan für die Ausgleichs- und/oder Federungszylinder der Tandemachse des gezogenen Anhängerfahrzeuges in Prinzipdarstellung in der Schaltposition, in welcher die beiden Achsen der Tandemachse in gleicher Weise belastet werden,
- Fig.8: den Ausgleichs- und Federungsplan nach Fig.7 für die Ausgleichs- und/oder Federungszylinder der Tandemachse des gezogenen Anhängerfahrzeuges in Prinzipdarstellung in der Schaltposition, in welcher die Vorderachse der Tandemachse entlastet wird,
- Fig.9: ein weiterer Ausgleichs- und Federungsplan für die Ausgleichs- und/oder Federungszylinder der Tandemachse des gezogenen Anhängerfahrzeuges in Prinzipdarstellung in der Schaltposition, in welcher die beiden Achsen der Tandemachse in gleicher Weise belastet werden und
- Fig.10: den Ausgleichs- und Federungsplan nach Fig.9 für die Ausgleichs- und/oder Federungszylinder der Tandemachse des gezogenen Anhängerfahrzeuges in Prinzipdarstellung in der Schaltposition, in welcher die Vorderachse der Tandemachse entlastet wird.

Die als gezogene landwirtschaftliche Pflanzenschutzspritze 1 ausgebildete Verteilmaschine bildet ein Anhängefahrzeug, welches an die Kuppeleinrichtung 2 eines die Maschine ziehenden Fahrzeuges, beispielsweise eines Ackerschleppers anzukuppeln ist. Die Pflanzenschutzspritze 1 weist einen Tragrahmen 3 auf, an dessen Vorderseite eine Zugdeichsel 4 mit einer Zug- und Kuppelvorrichtung 5 angeordnet ist. Auf dem Rahmen 3 ist ein Vorratsbehälter 6 zur Aufnahme des auszubringenden Materials, hier Pflanzenschutzmittel, angeordnet. An der Rückseite 7 sind an dem Rahmen 3 in nicht dargestellter Weise Verteilelemente, beispielsweise ein Verteilergestänge, welches sich quer zur Fahrtrichtung 8 erstreckt, angeordnet.

Der Tragrahmen 3 stützt sich im hinteren Bereich auf den an einer Tandemachse 9 angeordneten Laufrädern 10 auf dem Boden ab. Die Tandemachse 9 weist eine vordere Achse 11 und eine hintere Achse 12 auf, welche über Verbindungselemente mit den Tragrahmen 3 verbunden sind. Des Weiteren ist jeder Tandemachse 11, 12 im Bereich des jeweiligen Laufrades 10 der Tandemachse 9 zwischen der jeweiligen Achse 11 und dem Tragrahmen 3 ein Ausgleichs- und/oder Federungszylinders 13.0, 13.1, 14.0, 14.1 angeordnet. Diese Ausgleichs- und/oder Federungszylinder 13.0, 13.1, 14.0, 14.1 sind Bestandteil einer hydropneumatischen Ausgleichs- und/oder Federungseinrichtung.

Die Zylinder 13.0, 13.1, 14.0, 14.1 weisen jeweils einen kolbenbodenseitigen Hubraum 13.0.1, 13.1.1, 14.0.1, 14.1, 1 und einen kolbenstangenseitigen zylinderringförmigen Hubraum 13.0.2, 13.1.2, 14.0.2, 14.1.2 auf.

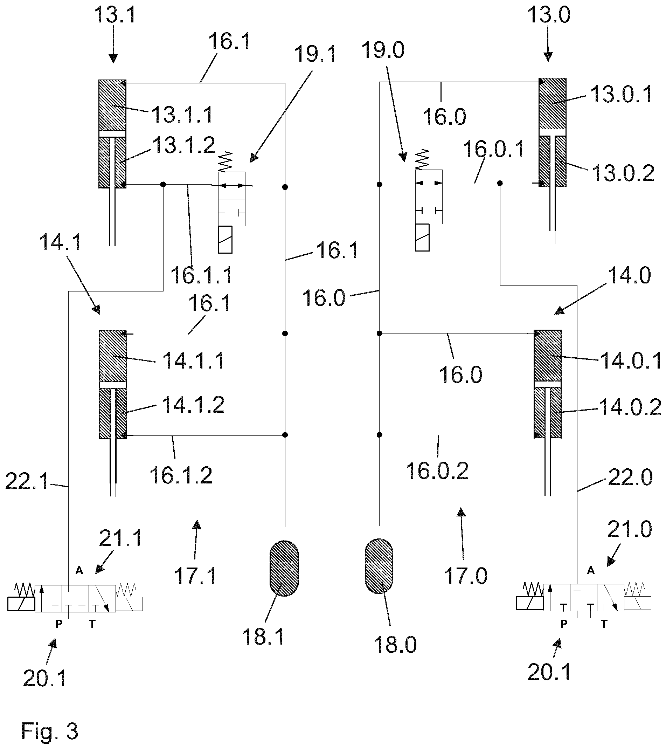

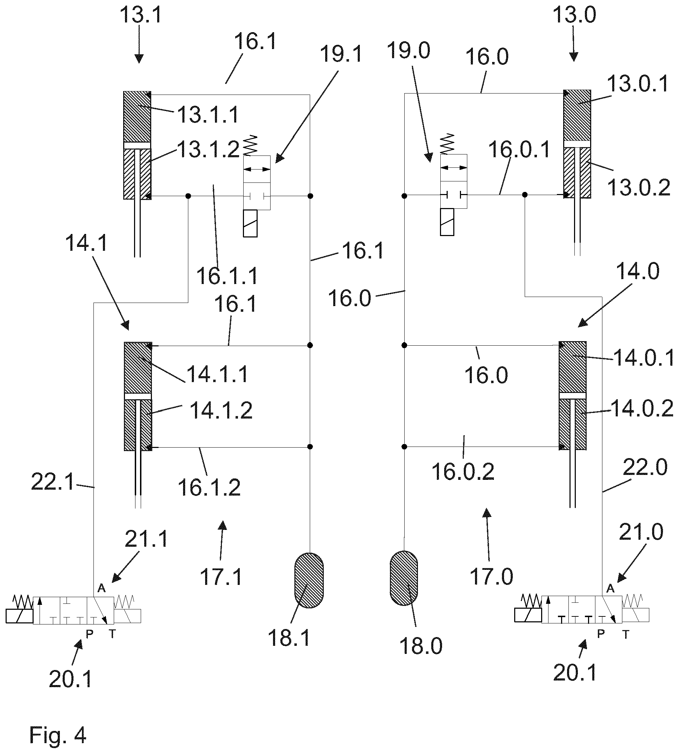

Bei dem Ausgleichs- und Federungsplan für die Ausgleichs- und/oder Federungszylinder 13.0, 13.1, 14.0, 14.1 der Tandemachse 9 gemäß Fig. 3 und 4 sind die Ausgleichs- und/oder Federungszylinder 13.0, 13.1, 14.0, 14.1 jeweils einer Seite der Tandemachse 9 in voneinander getrennten Federungs- und Ausgleichssystemen 15.0 und 15.1 angeordnet. Alle sich auf einer Seite der beiden Achsen 11,12 der Tandemachse 9 sich befindenden kolbenbodenseitigen Hubräume 13.0.1, 13.1.1, 14.0.1, 14.1, 1 der Zylinder 13.0, 13.1, 14.0, 14.1 sind mittels einer Parallelverbindungsleitung 16.0 und 16.1 miteinander verbunden. Weiterhin sind mit dieser Parallelverbindungsleitung 16.0 und 16.1 über Zwischenleitungen 16.0. 1, 16.0.2 und 16.1.1, 16.1.2 die kolbenstangenseitigen zylinderringförmigen Hubräume 13.0.2, 13.1.2, 14.0.2, 14.1.2 verbunden, so dass sämtliche Räume 13.0.1, 13.1.1, 14.0.1, 14.1, 1, 13.0.2, 13.1.2, 14.0.2, 14.1.2 der Zylinder 13.0, 13.1, 14.0, 14.1 jeweils einer Seite miteinander in einem Ausgleichssystem 17.0, 17.1 miteinander verbunden sind. Somit sind die kolbenbodenseitigem Hubräume 13.0.1, 13.1.1, 14.0.1, 14.1, 1 der Federungszylinder 13.0, 13.1, 14.0, 14.1 mit den kolbenstangenseitigen zylinderringförmigen Hubräumen 13.0.2, 13.1.2, 14.0.2, 14.1.2 der Ausgleichs-und/oder Federungszylinder 13.0, 13.1, 14.0, 14.1 mittels Verbindungsleitungen 16.0, 16.1, 16.0. 1, 16.0.2, 16.1.1, 16.1.2 miteinander in Art eines Ausgleichssystems verbunden. Weiterhin ist in diese Leitungen 16.0, 16.1, 16.0.1, 16.0.2, 16.1.1, 16.1.2 auf jeder Seite ein hydropneumatisches Federungselement 18.0, 18.1 angeordnet, um entsprechende Federungseigenschaften des Systems zu bekommen.

In den zu den kolbenstangenseitigen zylinderringförmigen Hubräumen der hinteren Tandemachse 12 zugeordneten Zylindern 13.0 und 13.1 führenden Verbindungsleitungen 16.0.1 und 16.1.1 ist jeweils ein Absperrventil 19.0, 10.1, welches beispielsweise bei 2/2 - Wegeventil ausgebildet sein kann, angeordnet. Weiterhin ist in der zwischen dem jeweiligen kolbenstangenseitigen zylinderringförmigen Hubraum 13.0.2, 13.1.2 des der hinteren Achse 12 zugeordneten Zylinders 13.0, 13.1 und dem zugeordneten Absperrventil 19.0, 19.1 sich befindenden Verbindungsleitung 16.0, 16.1 eine zu einem Hydrauliksystem 20.0, 20.1 führende und mit einem Umschaltventil 21.0, 21.1 versehene Zweigleitung 22.0, 22.1 in abzweigender Weise verbunden.

Die jeweils in einem Ausgleichssystem 17.0, 17.1 jeweils einander zugeordneten Absperr- 19.0, 19.1 und Umschaltventile 20.0, 20.1 sind durch nicht dargestellte schaltungstechnische Mittel so miteinander verknüpft, dass bei Absperrstellung des Absperrventils 19.0, 19.1 das zugeordnete Umschaltventil 20.0, 20.1 in Durchflussstellung geschaltet ist, wie die Fig. 3 zeigt, und bei Durchflussstellung des Absperrventils 19.0, 19.1 das zugeordnete Umschaltventil 20.0, 20.1 in Absperrstellung, wie Fig.4 zeigt, geschaltet ist. Hierbei werden durch ein Schaltimpuls, der von Hand oder über eine Bordrechner erzeugt wird, an die Absperrventile 19.0, 19.1 die Umschaltung dieser Ventile zwischen den in den Fig. 3 und 4 dargestellten Schaltstellungen erreicht. Durch die schaltungstechnische Verknüpfung der Absperrventile 19.0, 19.1 mit den Umschaltventilen 20.0, 20.1 werden diese ebenfalls entsprechend den in den Fig. 3 und 4 dargestellten Schaltstellungen in die entsprechende Schaltstellung umgeschaltet.

Wenn das jeweilige Absperrventil 19.0, 19.1, welches dem kolbenstangenseitigen Hubraum 13.0.2, 13.1.2 des jeweiligen hinteren Zylinders 13.0. 13.1 zugeordnet ist, in Absperrstellung gemäß Fig.4 geschaltet ist, befindet sich dieser jeweilige kolbenstangenseitige Hubraum 13.02, 13.1.2 nicht mehr in dem Ausgleichs- und/oder Federungssystem 17.0, 17.1.

In der Schaltstellung des jeweiligen Absperrventils 19.0, 19.1 und des jeweiligen Umschaltventils 20.0, 20.1 gemäß Fig. 3 befindet sich das Ausgleichs- und/oder Federungssystem 17.0, 17.1 im Normalmodus. In diesem Normalmodus befindet sich sowohl auf der Kolbenbodenseite wie auch auf der Kolbenstangenseite des jeweiligen Zylinders 13.0, 13.1, 14.0, 14.1 derselbe Öldruck. Dadurch wird die auf sie einwirkende Last effektiv nur von der Fläche der Kolbenstange des jeweiligen Zylinders 13.0, 13.1, 14.0, 14.1 getragen. In dem Normalmodus wird die wirksame Last gleichmäßig von allen Zylindern 13.0, 13.1, 14.0, 14.1 getragen und entsprechend auf die beiden Achsen 11 und 12 der Tandemachse 9 übertragen.

In der Schaltstellung des jeweiligen Absperrventils 19.0, 19.1 und des jeweiligen Umschaltventils 20.0, 20.1 gemäß Fig. 4 befindet sich das Ausgleichs- und/oder Federungssystem 17.0, 17.1 im Traktionsverstärkungsmodus für den die Maschine ziehenden Ackerschlepper. Um diese Traktionserhöhung zu erreichen, das heißt, dass Gewicht von der Maschine über den Ankoppelpunkt auf die Hinterachse des Ackerschleppers übertragen wird, wird die Belastung der vorderen Achse 11 der Tandemachse 9 durch die Schaltstellung der Absperrventile 19.0, 19.1 und der Umschaltventile 20.0, 20.1 gemäß Fig. 4 entsprechend des Traktionsverstärkungsmodus verringert. Dies wird dadurch erreicht, dass er jeweilige kolbenstangenseitige Hubraum 13.0.2, 13.1.2 durch das jeweilige Absperrventil 19.0, 19.1, in dem es in Absperrstellung, siehe Fig.4, geschaltet wird, von dem Ausgleichs- und/oder Federungssystem 17.0, 17.1 abgetrennt wird. Dieser kolbenstangenseitige Hubraum 13.0.2, 13.1.2 des jeweiligen Zylinders 13.0, 13.1 der hinteren Achse 12 wird somit drucklos geschaltet, weil die jeweilige Leitung 22.0, 22.1 ungehindert in den Tank des Hydrauliksystems 20.0, 20.1 führt, das heißt, dass dieser jeweilige Hubraum 13.0.2, 13.1.2 vom Ausgleichs- und/oder Federungssystem 17.0, 17.1 abgetrennt wird. Somit tragen die komplette Kolbenflächen der der hinteren Achse 12 der Tandemachse 9 zugeordneten Zylinder 13.0, 13.1 die Last, hierdurch wird die vordere Achse 11 der Tandemachse 9 entlastet. Dies führt zwangsläufig zu einer höheren Lastübertragung von der angehängten Maschine 1 auf den Ackerschlepper.

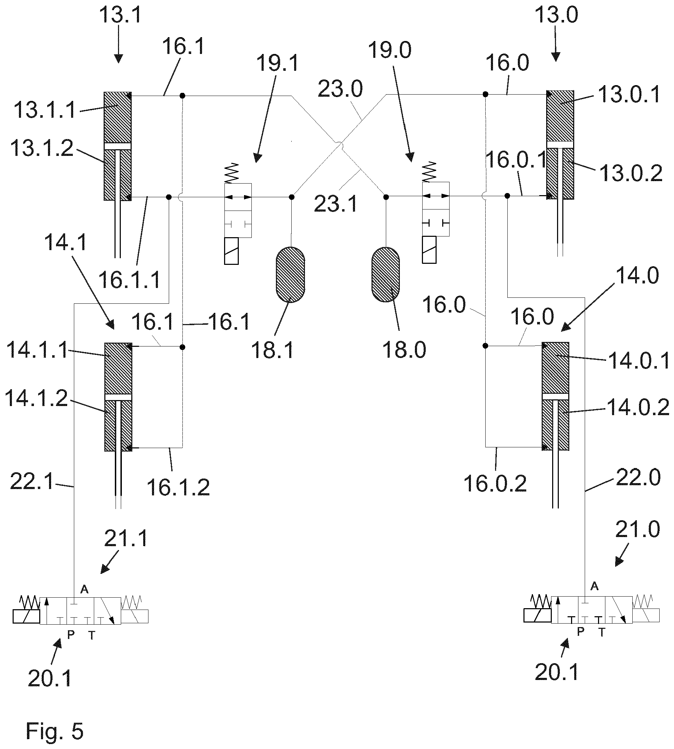

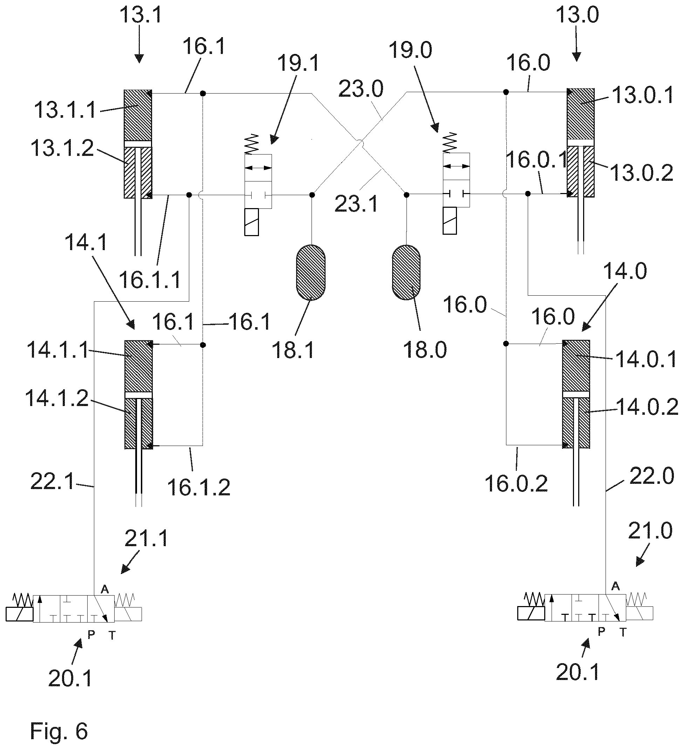

Der Ausgleichs- und Federungsplan für die Ausgleichs- und/oder Federungszylinder 13.0, 13.1, 14.0, 14.1 der Tandemachse 9 gemäß Fig. 5 und 6 unterscheidet sich vom dem Ausgleichs- und Federungsplan für die Ausgleichs- und/oder Federungszylinder 13.0, 13.1, 14.0, 14.1 der Tandemachse 9 gemäß Fig. 3 und 4 lediglich durch eine Überkreuzverschaltung der Hubräume 13.0.1, 13.1.1, 13.0.2, 13.1.2 der beiden der hinteren Achse 12 der Tandemachse 9 zugeordneten Zylinder 13.0 und 13.1. Hierzu sind einerseits der kolbenbodenseitige Hubraum 13.0.1 der Zylinders 13.0 und der kolbenstangenseitige zylinderringförmige Hubraum 13.1.2 des Zylinders 13.1 über eine erste Kreuzleitung 23.0 und andererseits der kolbenbodenseitige Hubraum 13.1.1 der Zylinders 13.1 und der kolbenstangenseitige zylinderringförmige Hubraum 13.0.2 des Zylinders 13.0 über eine zweite Kreuzleitung 23.1 miteinander verbunden. Hierdurch wird eine bessere Wankstabilität erreicht.

Die Umschaltung des Systems zwischen Normalmodus gemäß Fig. 5 und dem Traktionsverstärkungsmodus gemäß Fig.6 erfolgt entsprechend der Beschreibung zu dem Ausführungsbeispiel nach den Fig. 3 und 4.

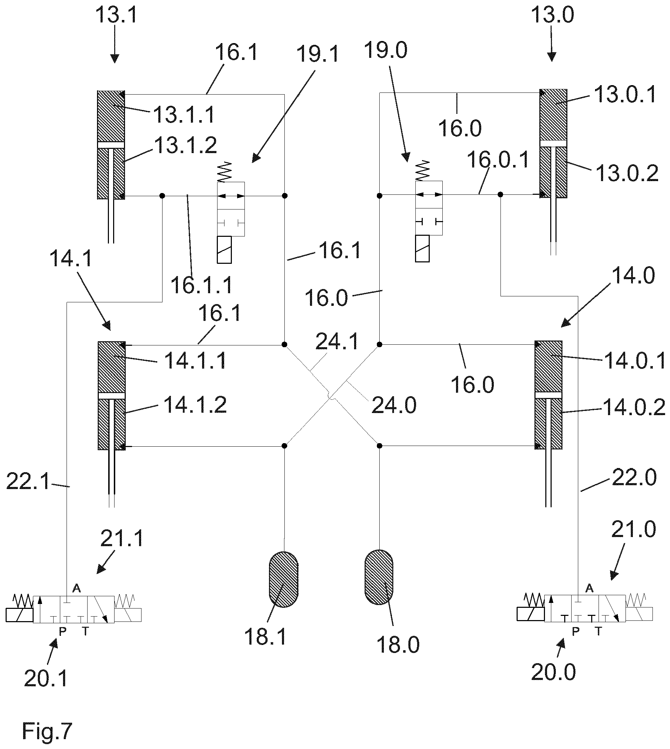

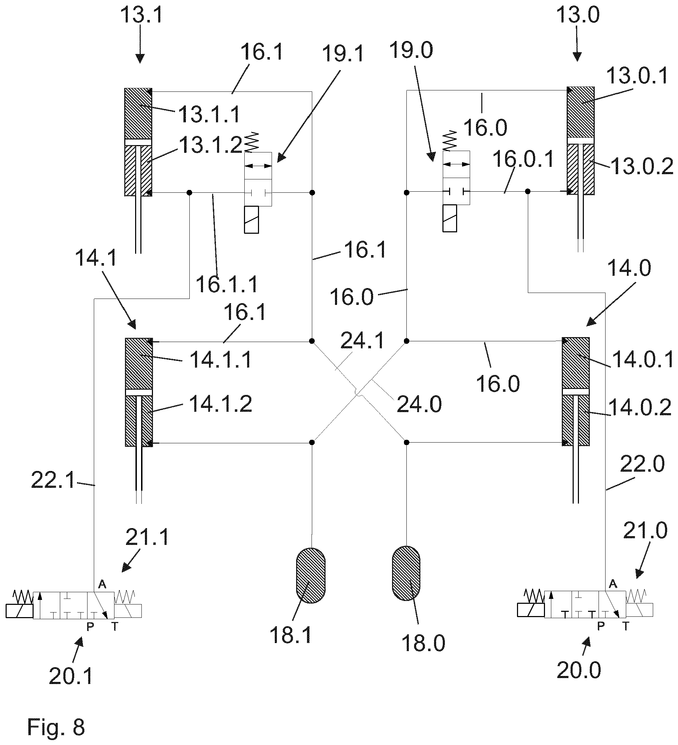

Der Ausgleichs- und Federungsplan für die Ausgleichs- und/oder Federungszylinder 13.0, 13.1, 14.0, 14.1 der Tandemachse 9 gemäß Fig. 7 und 8 unterscheidet sich vom dem Ausgleichs- und Federungsplan für die Ausgleichs- und/oder Federungszylinder 13.0, 13.1, 14.0, 14.1 der Tandemachse 9 gemäß Fig. 3 und 4 lediglich durch eine Überkreuzverschaltung der Hubräume 14.0.1, 14.1.1, 14.0.2, 14.1.2 der beiden der vorderen Achse 11 der Tandemachse 9 zugeordneten Zylinder 14.0 und 14.1. Hierzu sind einerseits der kolbenbodenseitige Hubraum 14.0.1 der Zylinders 14.0 und der kolbenstangenseitige zylinderringförmige Hubraum 14.1.2 des Zylinders 14.1 über eine erste Kreuzleitung 24.0 und andererseits der kolbenbodenseitige Hubraum 14.1.1 der Zylinders 14.1 und der kolbenstangenseitige zylinderringförmige Hubraum 14.0.2 des Zylinders 14.0 über eine zweite Kreuzleitung 24.1 miteinander verbunden. Hierdurch wird eine bessere Wankstabilität erreicht.

Die Umschaltung des Systems zwischen Normalmodus gemäß Fig. 7 und dem Traktionsverstärkungsmodus gemäß Fig.8 erfolgt entsprechend der Beschreibung zu dem Ausführungsbeispiel nach den Fig. 3 und 4.

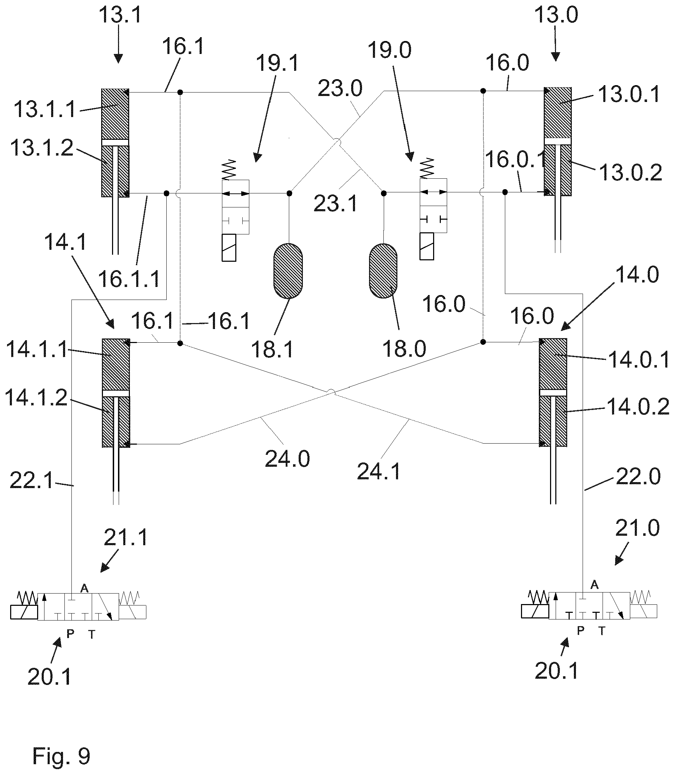

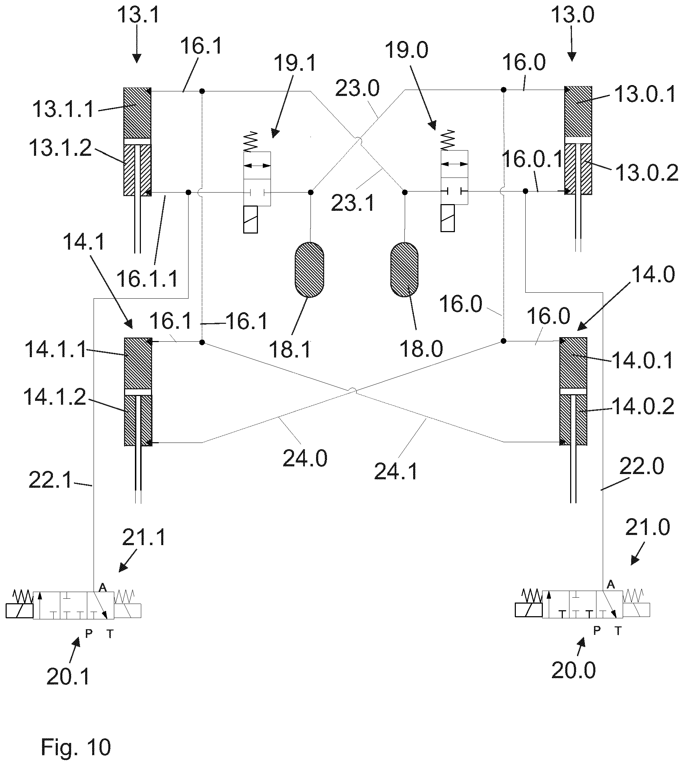

Der Ausgleichs- und Federungsplan für die Ausgleichs- und/oder Federungszylinder 13.0, 13.1, 14.0, 14.1 der Tandemachse 9 gemäß Fig. 9 und 10 unterscheidet sich vom dem Ausgleichs- und Federungsplan für die Ausgleichs- und/oder Federungszylinder 13.0, 13.1, 14.0, 14.1 der Tandemachse 9 gemäß Fig. 3 und 4 zunächst durch eine erste Überkreuzverschaltung der Hubräume 13.0.1, 13.1.1, 13.0.2, 13.1.2 der beiden der hinteren Achse 12 der Tandemachse 9 zugeordneten Zylinder 13.0 und 13.1. Hierzu sind einerseits der kolbenbodenseitige Hubraum 13.0.1 der Zylinders 13.0 und der kolbenstangenseitige zylinderringförmige Hubraum 13.1.2 des Zylinders 13.1 über eine erste Kreuzleitung 23.0 und andererseits der kolbenbodenseitige Hubraum 13.1.1 der Zylinders 13.1 und der kolbenstangenseitige zylinderringförmige Hubraum 13.0.2 des Zylinders 13.0 über eine zweite Kreuzleitung 23.1 miteinander verbunden.

Der Ausgleichs- und Federungsplan für die Ausgleichs- und/oder Federungszylinder 13.0, 13.1, 14.0, 14.1 der Tandemachse 9 gemäß Fig. 9 und 10 unterscheidet sich weiterhin vom dem Ausgleichs- und Federungsplan für die Ausgleichs- und/oder Federungszylinder 13.0, 13.1, 14.0, 14.1 der Tandemachse 9 gemäß Fig. 3 und 4 zusätzlich durch eine zweite Überkreuzverschaltung der Hubräume 14.0.1, 14.1.1, 14.0.2, 14.1.2 der beiden der vorderen Achse 11 der Tandemachse 9 zugeordneten Zylinder 14.0 und 14.1. Hierzu sind einerseits der kolbenbodenseitige Hubraum 14.0.1 der Zylinders 14.0 und der kolbenstangenseitige zylinderringförmige Hubraum 14.1.2 des Zylinders 14.1 über eine erste Kreuzleitung 24.0 und andererseits der kolbenbodenseitige Hubraum 14.1.1 der Zylinders 14.1 und der kolbenstangenseitige zylinderringförmige Hubraum 14.0.2 des Zylinders 14.0 über eine zweite Kreuzleitung 24.1 miteinander verbunden. Durch die beiden Überkreuzschaltungen wird eine besserte Wankstabilität erreicht.

Die Umschaltung des Systems zwischen Normalmodus gemäß Fig. 9 und dem Traktionsverstärkungsmodus gemäß Fig.10 erfolgt entsprechend der Beschreibung zu dem Ausführungsbeispiel nach den Fig. 3 und 4.

## Patentansprüche

1. Anhängerfahrzeug mit Tandemachse (9), insbesondere gezogene landwirtschaftliche Verteilmaschine, wie beispielsweise Pflanzenschutzspritze, mit einem Rahmen (3), auf der Vorderseite des Rahmens angeordneter Zug- und Kuppelvorrichtung (5), Vorratsbehälter (6), wobei jeder Achse (11, 12) der Tandemachse (9) zumindest zwei beabstandet zueinander angeordnete Ausgleichs- und/oder Federungszylinder (13.0, 13.1, 14.0, 14.1), die jeweils einem Laufrad (10) der Tandemachse (9) zugeordnet und zwischen dem Rahmen (3) und der jeweiligen Achse (11, 12) angeordnet sind, eine hydropneumatische Ausgleichs- und/oder Federungseinrichtung (13.0, 13.1, 14.0, 14.1) zugeordnet sind, wobei alle Ausgleichs- und/oder Federungszylinder jeweils einen kolbenbodenseitigen Hubraum (13.0.1, 13.1.1, 14.0.1, 14.1.1) und einen kolbenstangenseitigen zylinderringförmigen Hubraum (13.0.2, 13.1.2, 14.0.2, 14.1.2) aufweisen, wobei alle sich auf einer Seite der beiden Achsen (11, 12) der Tandemachse (9) sich befindenden kolbenbodenseitigen Hubräume der Ausgleichs- und/oder Federungszylinder (13.0, 13.1, 14.0, 14.1) über eine Parallelverbindungsleitung (16.0, 16.1) miteinander verbunden sind, wobei kolbenbodenseitige Hubräume der Federungszylinder mit kolbenstangenseitigen zylinderringförmigen Hubräumen der Ausgleichs- und/ oder Federungszylinder mittels Verbindungsleitungen miteinander verbunden sind, **dadurch gekennzeichnet, dass** in den zu den kolbenstangenseitigen zylinderringförmigen Hubräumen (13.0.2, 13.1.2) der der hinteren Achse (12) der Tandemachse (9) zugeordneten Ausgleichs- und/oder Federungszylinder (13.0, 13.1) führenden Verbindungsleitungen (16.0.1, 16.1.1) jeweils ein Absperrventil (19.0, 19.1) angeordnet sind, dass von der zwischen dem jeweiligen kolbenstangenseitigen zylinderringförmigen Hubraum (13.0.2, 13.1.2) der hinteren Ausgleichs- und/ oder Federungszylinder (13.0, 13.1) und dem zugeordneten Absperrventil (19.0, 19.1) sich befindlichen Verbindungsleitung (16.0.1, 16.1.₁) jeweils eine zu einem Hydrauliksystem (20.0, 20.1) führende und mit einem Umschaltventil (21.0, 21.1) versehene Zweigleitung (22.0, 22.1) abzweigt.

2. Anhängerfahrzeug nach Anspruch 1, **dadurch gekennzeichnet, dass** die einer Verbindungsleitung (16.0.1, 16.1.1) jeweils zugeordneten Absperrventile (19.0, 19.1) und Umschaltventile (21.0, 21.1) durch schaltungstechnische Mittel so mit miteinander verknüpft sind, dass bei Absperrstellung des Absperrventiles (19.0, 19.1) das zugeordnete Umschaltventil (21.0, 21.1) in Durchflussstellung geschaltet ist und bei Durchflussstellung des Absperrventiles (19.0, 19.1) das zugeordnete Umschaltventil (21.0, 21.1) in Absperrstellung geschaltet ist.

3. Anhängerfahrzeug nach Anspruch 1, **dadurch gekennzeichnet, dass** das Absperrventil (19.0, 19.1) als 2/2 - Wegeventil ausgebildet ist.

4. Anhängerfahrzeug nach Anspruch 1, **dadurch gekennzeichnet, dass** in zumindest einigen der Verbindungsleitungen ein hydropneumatisches Federungselement (18.0, 18.1) angeordnet ist.

## Claims

1. Trailer vehicle having a tandem axle (9), in particular drawn agricultural distribution machine, such as for example a crop protection sprayer, having a frame (3), a pulling and coupling apparatus (5) which is arranged on the front side of the frame, a storage container (6), each axle (11, 12) of the tandem axle (9) being assigned at least two compensation and/or suspension cylinders (13.0, 13.1, 14.0, 14.1) which are arranged spaced apart from one another and are assigned to in each case one running wheel (10) of the tandem axle (9) and are arranged between the frame (3) and the respective axle (11, 12), and a hydropneumatic compensation and/or suspension device (13.0, 13.1, 14.0, 14.1), all compensation and/or suspension cylinders having in each case one piston crown-side swept volume (13.0.1, 13.1.1, 14.0.1, 14.1.1) and one piston rod-side cylindrical ring-shaped swept volume (13.0.2, 13.1.2, 14.0.2, 14.1.2), all piston crown-side swept volumes of the compensation and/or suspension cylinders (13.0, 13.1, 14.0, 14.1) which are situated on one side of the two axles (11, 12) of the tandem axle (9) being connected to one another via a parallel connecting line (16.0, 16.1), piston crown-side swept volumes of the suspension cylinders being connected to piston rod-side cylindrical ring-shaped swept volumes of the compensation and/or suspension cylinders by means of connecting lines, **characterized in that** in each case one shut-off valve (19.0, 19.1) is arranged in the connecting lines (16.0.1, 16.1.1) which lead to the piston rod-side cylindrical ring-shaped swept volumes (13.0.2, 13.1.2) of the compensation and/or suspension cylinders (13.0, 13.1) which are assigned to the rear axle (12) of the tandem axle (9), and **in that** in each case one branch line (22.0, 22.1) which leads to a hydraulic system (20.0, 20.1) and is provided with a switchover valve (21.0, 21.1) branches off from the connecting line (16.0.1, 16.1.1) which is situated between the respective piston rod-side cylindrical ring-shaped swept volume (13.0.2, 13.1.2) of the rear compensation and/or suspension cylinders (13.0, 13.1) and the associated shut-off valve (19.0, 19.1).

2. Trailer vehicle according to Claim 1, **characterized in that** the shut-off valves (19.0, 19.1) and switchover valves (21.0, 21.1) which are assigned in each case to a connecting line (16.0.1, 16.1.1) are linked to one another by way of switching means in such a way that, in the shut-off position of the shut-off valve (19.0, 19.1), the associated switchover valve (21.0, 21.1) is switched into the throughflow position and, in the throughflow position of the shut-off valve (19.0, 19.1), the associated switchover valve (21.0, 21.1) is switched into the shut-off position.

3. Trailer vehicle according to Claim 1, **characterized in that** the shut-off valve (19.0, 19.1) is configured as a 2/2-way valve.

4. Trailer vehicle according to Claim 1, **characterized in that** a hydropneumatic suspension element (18.0, 18.1) is arranged in at least some of the connecting lines.

## Revendications

1. Véhicule de remorquage avec essieu tandem (9), notamment machine d'épandage agricole tractée, par exemple système d'arrosage de produits phytosanitaires, avec un châssis (3), un dispositif de traction et de couplage (5) disposé sur le côté avant du châssis, des bacs de réserve (6), un agencement d'équilibrage et d'amortissement (13.0, 13.1, 14.0, 14.1) hydropneumatique étant associé à chaque essieu (11, 12) de l'essieu tandem (9) d'au moins deux cylindres d'équilibrage et d'amortissement (13.0, 13.1, 14.0, 14.1) disposés à une certaine distance l'un de l'autre, ces cylindres étant respectivement associés à une roue de roulement (10) de l'essieu tandem (9) et étant disposés entre le châssis (3) et l'essieu (11, 12) respectif, tous les cylindres d'équilibrage et d'amortissement comportant respectivement une cylindrée (13.0.1, 13.1.1, 14.0.1, 14.1.1) disposée du côté de fond de piston et une cylindrée (13.0.2, 13.1.2, 14.0.2, 14.1.2) en forme de bague cylindrique disposée du côté de tige de piston, toutes les cylindrées des cylindres d'équilibrage et d'amortissement (13.0, 13.1, 14.0, 14.1) situées du côté de fond de piston et se trouvant sur un côté des deux essieux (11, 12) de l'essieu tandem (9) étant reliées entre elles via une conduite de liaison parallèle (16.0, 16.1), les cylindrées des cylindres d'amortissement prévues du côté de fond de piston étant reliées aux cylindrées, en forme de bague cylindrique et situées du côté de tige de piston, du cylindre d'équilibrage et d'amortissement à l'aide des conduites de liaison, **caractérisé en ce que** respectivement une soupape de déverrouillage (19.0, 19.1) est disposée dans les conduites de liaison (16.0.1, 16.1.1) conduisant aux cylindrées (13.0.2, 13.1.2) en forme de bague cylindrique situées du côté de tige de piston des cylindres d'équilibrage et d'amortissement (13.0, 13.1) associés à l'essieu (12) arrière de l'essieu tandem (9), que respectivement une conduite dérivée (22.0, 22.1) conduisant à un système hydraulique (20.0, 20.1) et pourvue d'une soupape d'inversion (21.0, 21.1) part de la conduite de liaison (16.0.1, 16.1.1) se trouvant entre la cylindrée (13.0.2, 13.1.2) respective en forme de bague cylindrique située du côté de tige de piston des cylindres d'équilibrage et d'amortissement (13.0, 13.1) arrière et la soupape de déverrouillage (19.0, 19.1) associée.

2. Véhicule de remorquage selon la revendication 1, **caractérisé en ce que** les soupapes de déverrouillage (19.0, 19.1) et soupapes d'inversion (21.0, 21.1) respectivement associées à une conduite de liaison (16.0.1, 16.1.1) sont raccordées entre elles par des moyens techniques de connexion de telle sorte que dans la position de déverrouillage de la soupape de déverrouillage (19.0, 19.1), la soupape d'inversion (21.0, 21.1) associée soit connectée dans la position de passage et que dans la position de passage de la soupape de déverrouillage (19.0, 19.1), la soupape d'inversion (21.0, 21.1) associée soit connectée dans la position de déverrouillage.

3. Véhicule de remorquage selon la revendication 1, **caractérisé en ce que** la soupape de déverrouillage (19.0, 19.1) soit réalisée sous la forme d'une soupape à 2/2 voies.

4. Véhicule de remorquage selon la revendication 1, **caractérisé en ce qu'**un élément amortisseur (18.0, 18.1) hydropneumatique est disposé dans au moins quelques-unes des conduites de liaison.
